# EUROPÄISCHE PATENTSCHRIFT

(11) **EP 0 468 299 B1**
(45) Veröffentlichungstag und Bekanntmachung des Hinweises auf die Patenterteilung: **06.09.1995**
(21) Anmeldenummer: 91111590.5
(22) Anmeldetag: 12.07.1991
(51) Int. Cl.: H02H 3/02, H02H 7/04, H01H 85/46

(54) **Schaltungsanordnung mit einem Transformator**
Circuit arrangement with a transformer
Circuit avec un transformateur

(30) Priorität: 21.07.1990 DE 4023238
(43) Veröffentlichungstag der Anmeldung: 29.01.1992
(73) Patentinhaber: AEG Sachsenwerk GmbH, D-93053 Regensburg (DE)
(72) Erfinder: Stegmüller, Karl, Dipl.-Ing., W-8401 Wiesent (DE)
(74) Vertreter: Breiter, Achim, Dipl.-Ing.

(56) Entgegenhaltungen:
- DE-C- 868 467
- US-A- 2 838 718
- G. G. SEIP "Electrical Installations Handbook", 2. Auflage, Teil 1, Kapitel 1.4; 1987, J. Wiley & Sons

## Beschreibung

Die Erfindung betrifft eine Schaltungsanordnung gemäß dem Oberbegriff des ersten Anspruchs.

Es ist insbesondere in Mittelspannungsnetzen bekannt (G. G. SEIP "Electrical Installations Handbook" 2. Auflage, Teil 1, Kapitel 1.4 "System Prodection", Seiten 208, 242 - 247), in Serie mit einem primärseitigen Phasenanschluß des Transformators einen Betriebsschalter und eine Sicherung zu legen. An diesen zu schaltenden Stromkreis ist auch ein Überströmauslöser angeschlossen, der beim Auftreten von unzulässigen Überströmen eine Öffnung des Betriebsschalters auslöst. Dabei ist die Auslösekennlinie des Betriebsschalters abhängig vom Strom so gesteuert, daß bei geringen Überströmen eine längere Auslösezeit vorgegeben ist, als bei hohen Überströmen. Als Sicherung wird ein Typ verwendet, der einen Nennstrom aufweist, der mindestens das 1,5 bis 2fache des Nennstroms des Transformators aufweist, jedoch bis zum 4 oder 5fachen des Nennstroms betragen kann. So besitzt beispielsweise für einen 10-kV-Transformator mit einer Nennleistung von 630 kVA die dazugehörige Sicherung einen Nennstrom von 100 bis 160 A. Dabei ist zu beachten, daß der Mindestausschaltstrom der Sicherung, bei dem dieselbe erst nach längerer Überlastung auslöst, etwa dem doppelten Sicherungs-Nennstrom entspricht. Hierdurch wird vermieden, daß die Sicherung durch Einschaltstromstöße oder kurzzeitige Überlastungen auslöst. Die Sicherung ist dabei so auszulegen, daß ihr Auslösestrom bei einem sekundärseitigen Kurzschluß des Transformators überschritten wird. Es hat sich bei diesem Schaltungsaufbau gezeigt, daß die Sicherung durch den normalen Betriebsstrom und andere betriebsmäßige Überlastungsfälle einem Alterungsprozeß unterliegt, der ein vorzeitiges Auslösen der Sicherung nach sich ziehen kann.

Der Erfindung liegt die Aufgabe zugrunde, bei einer Schaltungsanordnung gemäß dem Oberbegriff des Anspruchs 1 Maßnahmen zu treffen, durch welche Vorschädigungen der Sicherung durch im Betrieb auftretende Betriebsströme und selbst zeitlich eng begrenzte Kurzschlüsse auf der Sekundärseite des Transformator ganz oder zumindest weitgehend vermieden werden.

Die Lösung dieser Aufgabe erfolgt gemäß der Erfindung durch die kennzeichnenden Merkmale des Anspruchs 1.

Bei einem Aufbau einer Schaltungsanordung gemäß der Erfindung ist die Sicherung deutlich überdimensioniert und der Betriebsschalter so ausgelegt, daß die im Betrieb auftretenden üblichen Betriebs- und Überlastströme sicher abgeschaltet werden können. Durch die Überdimensionierung der Sicherung wird der Schmelzleiter der Sicherung durch die üblichen Betriebs-und Überlastströme praktisch nicht beeinflußt. Tritt jedoch nach der hochspannungsseitigen Sicherung, insbesondere im an sich mit Öl gefüllten Gehäuses des Transformators ein Kurzschluß bzw. ein Spannungsüberschlag auf, der einen Phasenkurzschluß oder einen Erdschluß verursacht, dann steigt der zu schaltende Strom auf Werte bis zu einigen 1000 Ampere. Bei derart hohen Überlastungen brennt der Schmelzleiter der Sicherung innerhalb weniger Millisekunden noch vor Erreichen des Maximums der ersten Halbwelle des zu schaltenden Wechselstromes durch und löscht den dabei entstehenden Lichtbogen noch bevor der Betriebsschalter seine Kontaktstrecke öffnen kann. Der Betriebsschalter beherrscht bei dieser Schaltungsanordnung den Teil der Lastkennlinie, der eine relativ lange Ansprechzeit der Sicherung zur Folge hat. Dagegen besitzt die Sicherung eine kürzere Ausschaltzeit als der Betriebsschalter, wenn der zu schaltende Strom höher als der Grenzausschaltstrom des Betriebsschalters liegt. Der Nennstrom der Sicherung kann dabei wenigstens 10 bis 20mal so hoch wie der Tranformator-Nennstrom sein. Der Grenzausschaltstrom des Betriebsschalters liegt dabei etwa 50 bis 200 mal so hoch wie der Nennstrom des Transformators. Die erfindungsgemäße Dimensionierung des Sicherungselements führt somit zu einem gegenüber dem nach geltenden einschlägigen Vorschriften bemessenen Sicherungstyp zu einem Schmelzleiter mit wesentlich vergrößertem Querschnitt. Es ergibt sich so im normalen Betriebsstrombereich bzw. überstrombereich, beispielsweise durch Einschaltströme oder kleine Fehlerströme, nur eine geringe spezifische Belastung und damit keine Vorschädigung der Sicherung. Außerdem ist im Nennstrombereich die Verlustwärme an der Sicherung ebenfalls äußerst gering.

Die Erfindung ist nachfolgend anhand von Skizzen eines Ausführungsbeispiels näher erläutert.

Es zeigen:
Fig. 1 ein Prinzipschaltbild der Schaltungsanordnung und
Fig. 2 ein Kennliniendiagramm der Auslösekennlinien des Betriebsschalters und der Sicherung.

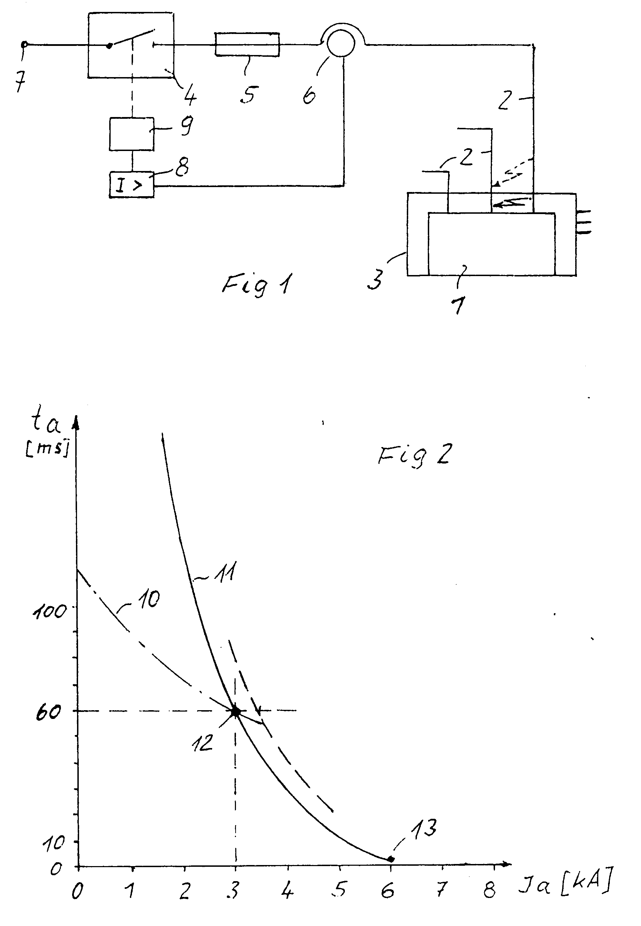

Ein Drehstromtransformator 1 mit drei Phasenanschlüssen 2 befindet sich in einem vorzugsweise mit Öl gefüllten Transformatorgehäuse 3. In die einzelnen Phasenanschlüsse 2 sind Schalteinrichtungen gelegt, die nur für einen der Phasenanschlüsse 2 dargestellt sind. Dabei liegt in dem zum betreffenden Phasenanschluß führenden Stromkreis die elektrische Serienschaltung aus einem Betriebsschalter 4, einer Sicherung 5 und und einem Stromwandler 6. Der freie Anschluß 7 des Betriebsschalters 4 ist dabei für die Verbindung mit einem Hochspannungsnetz vorgesehen. Der Stromwandler 6 ist Teil eines Überstromauslösers und speist ein Strom-Zeitrelais 8, das seinerseits eine mechanische Auslöseeinrichtung 9 für die Betätigung des Betriebsschalters steuert. Das Strom-Zeitrelais 8 bewirkt hierbei eine zeitverzögerte Abschaltung des Betriebsschalters 4 , wobei die Zeitverzögerung mit steigendem Strom abnimmt. Hierdurch wird vermieden, daß Einschaltstromstöße oder andere kurzzeitige Überlastungen und kleine Fehlerströme zum Öffnen des Betriebsschalters 4 führen. Der Betriebsschalter 4 ist dabei so dimensioniert, daß alle im üblichen Betrieb auftretenden Ströme einschließlich der durch einen sekundärseitigen Kurzschluß hervorgerufenen Stromspitzen beherrscht werden. Die Kennlinie des Betriebsschalters 4 verläuft dabei beispielsweise für einen Transformator mit einer Nennleistung von 630 kVA gemäß der strichpunktierten Linie 10 in Fig. 2. Die zeitverzögerte Auslösung des Betriebsschalters 4 liegt demnach im Betriebsstrombereich bei ca. 120 ms, während sie im Bereich des Grenzausschaltstroms des Betriebsschalters 4 auf 60 ms zurückgenommen ist. Diese Zeit ergibt sich z.B. aus der Eigenträgheit des Betriebsschalters 4 vom Auslöseimpuls bis zur tatsächlichen Öffnung der Schaltstrecke. Der Grenzausschaltstrom beträgt im Beispielsfall etwa 3000 Ampere.

Die Sicherung 5 weist demgegenüber einen Nennstrom auf, der etwa 5mal höher als der Nennstrom des Transformators 1 ist. Vorzugsweise liegt dieser Nennstrom der Sicherung jedoch 10mal oder mehr als 20mal so hoch wie der Nenn-Phasenstrom des Transformators 1. Hierdurch wird der Schmelzleiter durch die im üblichen Betrieb auftretenden Ströme praktisch nicht erwärmt oder gealtert und kann daher keine beachtliche Vorschädigung erleiden. Erst wenn ein primärseitiger Kurzschluß oder Spannungsüberschlag am Transformator 1, insbesondere innerhalb des Transformatorgehäuses 3 unter Ausbildung eines entsprechenden Lichtbogens eintritt, steigt der im Phasenanschluß zu schaltende Strom auf Werte an, die weit über dem Grenzausschaltstrom des Betriebsschalters 4 liegen. Nachdem die Auslösezeit der Sicherung stark stromabhängig ist, wird die bei 11 in Fig. 2 dargestellte Sicherungskennlinie so gelegt, daß im Bereich des Grenzausschaltstroms des Betriebsschalters die Sicherungskennlinie 11 die Schalterkennlinie 10 schneidet. Erst in einem solchen schweren Fehlerfalle spricht die Sicherung 5 an und trennt innerhalb weniger Millisekunden den gestörten Stromkreis, noch bevor der Betriebsschalter 4 seine Kontaktstrecke öffnet. Der Betriebsschalter beherrscht demnach den Teil der Lastkennlinie, der eine lange Ansprechzeit der Sicherung 5 zur Folge hätte. Erst nach dem Schnittpunkt der beiden Kennlinien 10 und 11 trennt nämlich die an sich weit überdimensionierte Sicherung 5 den gestörten Stromkreis schneller als der Betriebsschalter 4. Erreicht der primäre Kurzschlußstrom infolge Spannungsüberschlags beispielsweise 6000 Ampere, dann unterbricht diese Sicherung 5 den Stromkreis z.B. innerhalb von einer bei fünf Millisekunden. Dabei ist davon auszugehen, daß der Grenzausschaltstrom des Betriebsschalters 4 etwa 50 bis 200 mal so hoch wie der Transformator-Nennstrom ist. Demnach ist die Auslösezeit der Sicherung 5 bei einer Strombelastung, die etwa doppelt so hoch wie der Grenzausschaltstrom des Betriebsschalters 4 liegt, auf eine Zeit beschränkt, in welcher auch bei einem Lichtbogen innerhalb des mit Öl gefüllten Transformatorgehäuses 3 keine gefährlichen Schäden, insbesondere keine Kesselexplosion auftreten kann. Da im übrigen die Sicherung jedenfalls ab einer Strombelastung, die höher als der Grenzausschaltstrom des Betriebsschalters 4 ist, zeitlich schneller als der Betriebsschalter 4 den Stromkreis unterbricht, besteht auch durch diese hohe Strombelastung keine Gefährdung für den Betriebsschalter beim Abschaltvorgang. Für den als Beispiel angegebenen Transformator mit einer Nennleistung von 640 kVA kann eine Sicherung mit einem Nennstrom von etwa 300 Ampere zur Anwendung gelangen. In jedem Fall ist die Sicherung 5 so bemessen, daß sie einen durch den Grenzausschaltstrom des Schalters 4 bestimmten Wert am Schnittpunkt der beiden Kennlinien 10,11 durchläuft und zudem einen Punkt 13 berührt, der durch die Strombelastbarkeit des Transformators 1 im schweren Störungsfall durch die Zeitdauer bestimmt ist, für die der Transformator 1 im Transformatorgehäuse 3 für diesen Spitzenstrom ausgelegt ist. Man kann nach den einschlägigen Vorschriften davon ausgehen, daß ohne Kesselexplosion etwa 10 kA für eine Zeit von 10 ms als Lichtbogenstrom bei Phasenkurzschluß zulässig sind. Als Betriebsschalter wird im übrigen ein Leistungsschalter bzw. ein Trennleistungsschalter angewandt.

## Patentansprüche

1. Schaltungsanordnung mit einer elektrischen Serienschaltung aus einem Betriebsschalter (4) und einer Sicherung (5) auf der Primärseite eines Transformators (1), wobei der Nennstrom der Sicherung (5) mehrfach größer als der Transformator-Nennstrom ist, sowie mit einem an den zu schaltenden Stromkreis angekoppelten Überstromauslöser (6, 8, 9) für den Betriebsschalter (4), insbesondere für Mittel- oder Hochspannungsnetze, dadurch gekennzeichnet, daß der Nennstrom der Sicherung (5) mehr als fünfmal so groß wie der Transformator-Nennstrom ist, daß der Betriebsschalter (4) so dimensioniert ist, daß sein Grenzausschaltstrom die von Kurzschlüssen auf der Sekundärseite des Transformators (1) hervorgerufenen Spitzenströme beherrscht und daß die Sicherungskennlinie (11) die Betriebsschalterkennlinie (10) im Bereich des Grenzausschaltstroms derart schneidet, daß die Sicherung (5) erst ab einer Strombelastung, die höher als der Grenzausschaltstrom des Betriebsschalters (4) ist, zeitlich schneller als der Betriebsschalter (4) den Stromkreis unterbricht.

2. Schaltungsanordnung nach Anspruch 1, dadurch gekennzeichnet, daß der Nennstrom der Sicherung (5) mindestens zehnmal so hoch ist wie der Transformator-Nennstrom.

3. Schaltungsanordnung nach Anspruch 1 oder 2, dadurch gekennzeichnet, daß der Nennstrom der Sicherung (5) mindestens zwanzigmal so hoch wie der Transformator-Nennstrom ist.

4. Schaltungsanordnung nach einem der Ansprüche 1-3, dadurch gekennzeichnet, daß der Grenzausschaltstrom des Betriebsschalters (4) etwa 50 bis 200mal so hoch wie der Transformator-Nennstrom ist.

5. Schaltungsanordnung nach einem der Ansprüche 1-4, dadurch gekennzeichnet, daß die Ausschalt-Zeitverzögerung des Betriebsschalters (4) bei einer Belastung mit dem Grenzausschaltstrom etwa 60 Millisekunden oder mehr beträgt.

6. Schaltungsanordnung nach einem der Ansprüche 1-5, dadurch gekennzeichnet, daß die Sicherungskennlinie der Sicherung (5) sowohl den durch den Grenzausschaltstrom des Schalters (4) bestimmten Wert am Schnittpunkt von Sicherungskennlinie und Betriebsschalterkennlinie (10, 11) durchläuft als auch einen Punkt (13) berührt, der durch die Strombelastbarkeit des Transformators (1) im schweren Störungsfall durch die Zeitdauer bestimmt ist, für die der Transformator (1) im Gehäuse (3) für diesen Spitzenstrom ausgelegt ist.

7. Schaltungsanordnung nach einem der Ansprüche 1-6, dadurch gekennzeichnet, daß die Auslösezeit der Sicherung (5) bei einer Strombelastung, die etwa doppelt so hoch wie der Grenzausschaltstrom des Betriebsschalters (4) liegt, weniger als 5 Millisekunden beträgt.

8. Schaltungsanordnung nach einem der Ansprüche 1-7, dadurch gekennzeichnet, daß die Auslösezeit des Betriebsschalters mit zunehmender Strombelastung abnimmt.

9. Schaltungsanordnung nach einem der Ansprüche 1-8, dadurch gekennzeichnet, daß bei einem Tranformator (1) mit 640 kVA Nennleistung eine Sicherung (5) mit einem Nennstrom von etwa 300 Ampere in eine Phasenzuleitung (2) geschaltet ist.

10. Schaltungsanordnung nach einem der Ansprüche 1-9, dadurch gekennzeichnet, daß bei einem Transformator (1) mit 640 kVA Nennleistung ein Betriebsschalter (4) mit einem Grenzausschaltstrom von etwa drei Kiloampere in eine Phasenzuleitung (2) geschaltet ist.

11. Schaltungsanordnung nach einem der Ansprüche 1-10, dadurch gekennzeichnet, daß der Betriebschalter (4) für alle im Betrieb auftretenden Belastungen außer einem primärseitigen Kurzschluß bzw. Spannungsüberschlag am Transformator bemessen ist und daß die Sicherung (5) nur bei einem primärseitigen Kurzschluß bzw. Spannungsüberschlag am Transformator anspricht und dabei zeitlich vor dem Betriebsschalter (4) den Stromkreis unterbricht.

## Claims

1. Circuit arrangement with an electric series circuit consisting of an operating switch (4) and a fuse (5) on the primary side of a transformer (1), wherein the rated current of the fuse (5) is several times greater than the transformer rated current, and having an excess current release (6, 8, 9) for the operating switch (4), in particular for medium or high voltage mains, characterised in that the rated current of the fuse (5) is more than five times are great as the transformer rated current, in that the operating switch (4) is so dimensioned that its limit cut-out current controls the peak currents due to short-circuiting on the secondary side of the transformer (1), and in that the fuse characteristic curve (11) intersects with the operating switch characteristic curve (10) in the region of the limit cut-out current in such a manner that the fuse (5) interrupts the circuit only after a current load which is higher than the limit cut-out current of the operating switch (4) faster than the operating switch (4).

2. Circuit arrangement according to claim 1, characterised in that the rated current of the fuse (5) is at least ten times as high as the transformer rated current.

3. Circuit arrangement according to claim 1, characterised in that the rated current of the fuse (5) is at least twenty times as high as the transformer rated current.

4. Circuit arrangement according to one of claims 1 to 3, characterised in that the limit cut-out current of the operating switch (4) is approximately 50 to 200 times as high as the transformer rated current.

5. Circuit arrangement according to one of claims 1 to 4, characterised in that the cut-out time delay of the operating switch (4) at a load with the limit cut-out current is approximately 60 milliseconds or more.

6. Circuit arrangement according to one of claims 1 to 5, characterised in that characteristic curve of the fuse (5) passes through the value defined by the limit cut-out current of the switch (4) at the point of intersection of the fuse curve and the operating switch curve (10, 11) and touches a point (13) defined by the capacity for current load of the transformer (1) in the case of a serious fault by the duration for which the transformer (1) is set for this peak current in the housing (3).

7. Circuit arrangement according to one of claims 1 to 6, characterised in that the release time of the fuse (5) in the case of a current load which is approximately twice as high as the limit cut-out current of the operating switch (4) is less than 5 milliseconds.

8. Circuit arrangement according to one of claims 1 to 7, characterised in that the release time of the operating switch decreases as the current load increases.

9. Circuit arrangement according to one of claims 1 to 8, characterised in that in the case of a transformer (1) with a rated power of 640 kVA, a fuse (5) with a rated current of approximately 300 amperes is connected in a phase supply line (2).

10. Circuit arrangement according to one of claims 1 to 9, characterised in that in the case of a transformer (1) with a rated power of 640 kVA, an operating switch (4) with a limit cut-out current of approximately three kiloamperes is connected in a phase supply line (2).

11. Circuit arrangement according to one of claims 1 to 10, characterised in that the operating switch (4) is dimensioned for all loads occurring in operation in addition to a primary-side short-circuit or arking and in that the fuse (5) only responds in the case of a primary-side short-circuit or arking in the transformer and thus temporarily interrupts the circuit upstream of the operating switch (4).

## Revendications

1. Système de couplage avec un couplage électrique en série comprenant un interrupteur de service (4) et un fusible (5) sur le primaire d'un transformateur (1), le courant nominal du fusible (5) étant un multiple du courant nominal du transformateur, ainsi qu'avec un discontacteur (6 8, 9) couplé à un circuit de courant à commuter pour l'interrupteur de service (4), en particulier pour des réseaux à moyenne ou haute tension, caractérisé en ce que le courant nominal du fusible (5) est plus de cinq fois plus fort que le courant nominal du transformateur, en ce que l'interrupteur de service (4) est dimensionné pour que son courant limite de coupure maîtrise les courants de pointe provoqués par les courts-circuits sur le secondaire du transformateur (1) et en ce que la ligne caractéristique (11) du fusible coupe la ligne caractéristique (10) de l'interrupteur de service dans la zone du courant limite de coupure de telle manière que le fusible (5) n'interrompt le circuit de courant, plus rapidement que l'interrupteur de service (4), qu'à partir d'une charge de courant qui est supérieure au courant limite de coupure de l'interrupteur de service (4).

2. Système de couplage selon la revendication 1, caractérisé en ce que le courant nominal du fusible (5) est au moins dix fois plus élevé que le courant nominal du transformateur.

3. Système de couplage selon la revendication 1 ou 2, caractérisé en ce que le courant nominal du fusible (5) est au moins vingt fois plus élevé que le courant nominal du transformateur.

4. Système de couplage selon l'une des revendications 1-3, caractérisé en ce que le courant limite de coupure de l'interrupteur de service (4) est environ 50 à 200 fois plus élevé que le courant nominal du transformateur.

5. Système de couplage selon l'une des revendications 1-4, caractérisé en ce que le retard de coupure de l'interrupteur de service (4) est de l'ordre de 60 millisecondes ou plus en cas de charge par le courant limite de coupure.

6. Système de couplage selon l'une des revendications 1-5, caractérisé en ce que la courbe caractéristique du fusible (5) passe la valeur déterminée par le courant limite de coupure de l'interrupteur (4) au point d'intersection de la ligne caractéristique du fusible et de la ligne caractéristique de l'interrupteur de service (10, 11) et touche un point (13) qui, de par l'intensité de courant maximale admissible du transformateur (1) en cas de pannes graves, est déterminé par la durée pour laquelle le transformateur (1) est équipé dans le coffret (3) pour le courant de pointe.

7. Système de couplage selon l'une des revendications 1-6, caractérisé en ce que le temps de déclenchement du fusible (5), pour une charge de courant qui est environ deux fois plus élevée que le courant limite de coupure de l'interrupteur de service (4), est inférieur à 5 millisecondes.

8. Système de couplage selon l'une des revendications 1-7, caractérisé en ce que le temps de déclenchement de l'interrupteur de service décroît avec une charge croissante de courant.

9. Système de couplage selon l'une des revendications 1-8, caractérisé en ce que pour un transformateur (1) de 640 kA de puissance nominale, on fait intervenir un fusible (5) de courant nominal d'environ 300 ampères dans un conducteur d'amenée de phase (2).

10. Système de couplage selon l'une des revendications 1-9, caractérisé en ce que pour un transformateur (1) de 640 kA de puissance nominale, on fait intervenir un interrupteur de service (4) de courant limite de coupure d'environ 3 kiloampères dans un conducteur d'amenée de phase (2).

11. Système de couplage selon l'une des revendications 1-10, caractérisé en ce que l'interrupteur de service (4) est dimensionné pour toutes les charges survenant en fonctionnement à l'exception d'un court-circuit primaire respectivement d'une décharge de tension sur transformateur et en ce que le fusible (5) ne réagit qu'en présence d'un court-circuit primaire du transformateur, en interrompant le circuit de courant avant l'interrupteur de service (4).
